# EUROPÄISCHE PATENTSCHRIFT

(11) **EP 2 135 738 B1**
(45) Veröffentlichungstag und Bekanntmachung des Hinweises auf die Patenterteilung: **23.03.2011**
(21) Anmeldenummer: 08405160.6
(22) Anmeldetag: 20.06.2008
(51) Int. Cl.: B32B 27/20, B32B 27/32, B32B 27/34, B32B 15/08, B32B 15/20

(54) **Verfahren zum Konditionieren eines Absorbermaterials in einem Laminat**
Method of conditioning an absorptive material in a laminate
Procédé destiné à conditionner un matériau absorbant dans un stratifié

(43) Veröffentlichungstag der Anmeldung: 23.12.2009
(73) Patentinhaber: Amcor Flexibles Kreuzlingen Ltd., 8280 Kreuzlingen (CH)
(72) Erfinder: Hombach, Franz Peter, 8222 Beringen (CH); Brandl, Oliver, 78462 Konstanz (DE); Nägeli, Hans Rudolf, 8212 Neuhausen (CH)
(74) Vertreter: Burkhart, Hans

(56) Entgegenhaltungen:
- WO-A-2007/104344

## Beschreibung

Die Erfindung betrifft ein Verfahren nach dem Oberbegriff des Anspruchs 1.

Es ist allgemein bekannt, gegen Feuchtigkeit empfindliche Produkte durch Verpacken in Kunststoffmaterialien vor schädlichen atmosphärischen Einflüssen zu schützen. Feuchteempfindliche Produkte können beispielsweise mit einem für Wassermoleküle praktisch undurchlässigen Kunststofffilm umhüllt werden. Als Barriere gegen den Durchtritt von Feuchtigkeit kann z.B. ein Film aus einem Polyethylen hoher Dichte (HDPE) oder aus einem Polyvlnylidenehlorid-Methylacrylat-Copolymer (PVDC-MA) verwendet werden. Filme aus orientiertem Polypropylen (oPP), gegebenenfalls metallisiert, oder metallisierte Polyesterfilme, dienen ebenfalls als Barrierematerial gegen Feuchtigkeitsdurchtritt. Weiter sind Metallfolien als Barrierematerial gegen den Durchtritt von Feuchtigkeit bekannt und werden oft im Verbund mit Kunststofffilmen eingesetzt. Eine gute Barrierewirkung gegen Wasserdampf und Gase kann auch mit einer Schicht aus Ethylen-Vinylalkohol-Copolymer (EVOH) erreicht werden.

Obschon heute Laminate mit Barriereschichten mit hoher Durchtrittssperrwirkung gegen Feuchtigkeit bekannt sind, kann der Durchtritt von Feuchtigkeit gerade bei gesiegelten Verpackungen nicht vollständig verhindert werden, da die Kanten der Laminate durch die Barriereschicht nicht geschützt sind. Über diese ungeschützten Kanten im Bereich von Siegelungen kann Feuchtigkeit und in das Innere gesiegelter Verpackungen eindringen und die Qualität feuchteempfindlicher Produkte beeinträchtigen.

Aus WO-A-2004/000541 und WO-A-2004/080808 sind mehrschichtige Filme mit einer Barriereschicht und mit einer Feuchte absorbierendes Material enthaltenden Siegelschicht bekannt. Die Filme dienen zur Verpackung feuchteempfindlicher Gegenstände, wie z.B. Diagnostik-Teststreifen, und werden entweder nach Faltung gegen sich selbst oder gegen einen zweiten Film heissgesiegelt. Als Feuchte absorbierendes Material mit starker Wasserbindung wird bevorzugt Kalziumoxid (CaO) eingesetzt.

Aus WO-A-2007/104344 ist ein Laminat zur Herstellung von Blisterbodenteilen für Blisterpackungen zur Verpackung von gegen Feuchte empfindlichen Produkten bekannt. Das Laminat weist eine Sperrschicht als Barriere gegen Wasserdampf und Gase, eine auf einer ersten Seite der Sperrschicht angeordnete Aussenschicht aus Polyamid, ein auf der zweiten Seite der Sperrschicht angeordnetes, Feuchte absorbierendes Absorbermaterial und eine auf der zweiten Seite der Sperrschicht angeordnete, das Absorbermaterial zumindest teilweise abdeckende siegelfähige Innenschicht aus einem Polyolefin auf.

Bekannte Absorbermaterialien wie Silicagel, Zeolithe und Calciumoxid werden ab Werk mit einem Feuchtegrad < 1 % RH (relative Feuchtigkeit) ausgeliefert, sind in diesem trockenen Zustand extrudierbar und besitzen eine hohe Feuchtekapazität. Damit das Absorbermaterial bei einem definiert einzustellenden Feuchtelevel (z.B. 20% RH) eine puffernde Funktion besitzen, müssen sie auf diesen Wert befeuchtet werden. Dies kann nicht vor der Extrusion eines Absorbermaterial enthaltenden Materials erfolgen, da ein derart hoher Feuchtegehalt zu Wasserdampf bei der Extrusion führt und die Kunststoffschmelze wegen qualitätsmindernden Wasserdampferuptionen nicht verarbeitbar ist.

Der Erfindung liegt die Aufgabe zugrunde, ein Verfahren anzugeben, mit welchem bei einem Laminate mit einer Sperrschicht, Insbesondere einer Aluminiumfolie, als Barriere gegen Wasserdampf und Gase, einer auf einer ersten Seite der Sperrschicht angeordneten Aussenschicht aus Polyamid, insbesondere orientiertem Polyamid, einem auf der zweiten Seite der Sperrschicht angeordneten, Feuchte absorbierenden Absorbermaterial und einer auf der zweiten Seite der Sperrschicht angeordneten, das Absorbermaterial abdeckende siegelfähige Innenschicht aus einem Polyolefin das Absorbermaterial nach einer Extrusion, aber vor dem Formen der Blisterbodentelle und Verpacken von Produkten auf einfache Weise durch Einstellen eines vorgegebenen Feuchtegrades definiert vorkondltlonlert werden kann.

Zur erfindungsgemässen Lösung der Aufgabe führt ein Verfahren mit den Merkmalen des Anspruchs 1.

Bei dem Verfahren wird das Laminat durch ein Wasserbad geführt oder mit Wasser berieselt oder bedampft und nachfolgend zur Lagerung aufgerollt.

Das Absorbermaterial reagiert wegen der Abschirmung durch die Siegelschicht aus Polyolefin, insbesondere aus Polyethylen (PE) oder Polypropylen (PP), relativ träge auf Wasserkontakt. Dagegen reagiert die Aussenschicht aus Polyamid, vorzugsweise aus mono- oder biaxial orientiertem Polyamid (oPA) spontan auf Wasserkontakt.

Laminate der vorstehend genannten Art mit einer Aussenschicht aus oPA, einer Barriereschicht gegen Wasserdampf und Gase, z.B. einer Aluminiumfolie, einer Schicht aus Absorbermaterial und Siegelschicht als Innenschicht aus einem Polyolefin, z.B. aus PE, werden als Rollenware ausgeliefert. Zum Schutz des Feuchte absorbierenden Materials wird die gewickelte Rolle speziell verpackt, so dass keine Feuchtigkeit von aussen in das Laminat eindringen kann. In der gewickelten Rolle kommt jedoch die Aussenschicht aus oPA mit der nächsten Wickellage in Kontakt und liegt somit auf der siegelfähigen Innenschicht in kurzer Distanz zum Absorbermaterial. Damit ist es möglich, dass vorhandene Feuchte aus dem oPA durch die Siegelschicht permeieren und so in das Absorbermaterial gelangen kann, was beim fertig geformten Blisterbodenteil wegen der Barriereschicht aus Aluminium nicht mehr möglich ist.

Je nach vorhandener Feuchte im oPA und je nach Menge des Absorbermaterials bzw. der Dicke der Absorberschicht wird die Absorberschicht schon vor ihrem Einsatz als Absorbermaterial im Blister mit einer bestimmten Feuchtemenge in Kontakt gebracht und auf diese Weise vorkonditioniert. Später z.B. durch Querdiffusion eindringende Feuchtigkeit trifft dann nicht mehr auf ein trockenes, sonder auf ein befeuchtetes und daher partiell mit Wasser gesättigtes Absorbermaterial, welches sodann auf diesem einfgestellten Feuchtelevel so lange verharrt, bis eine Sättigung erreicht ist und die Feuchtekapazität sich zu einem höheren Feuchtelevel verschiebt.

Die von der Aussenschicht aus Polyamid aufzunehmende Wassermenge kann auf einfache Weise durch die Verweilzeit des Laminates im Wasser gesteuert werden.

Bevorzugt wird das Laminat während seiner Herstellung kontinuierlich durch ein Wasserbad geleitet und nachfolgend aufgerollt.

Die Verweilzeit des Laminates im Wasserbad kann bei gleich bleibender Produktionsgeschwindigkeit durch Verlängern oder Verkürzen der Eintauchlänge verlängert bzw. verkürzt werden. Am einfachsten wird dies so bewerkstelligt, dass das Laminat im Wasserbad über Umlenkrollen geführt und die Verweilzeit des Laminates im Wasserbad durch Änderung der Anzahl Umlenkrollen eingestellt wird. Damit kann die Feuchtemenge an die jeweilige Produktionsgeschwindigkeit oder an die Höhe der gewünschten Restfeuchte angepasst werden.

Die Innenschicht besteht bevorzugt aus Polyolefin und enthält bevorzugt wenigstens ein Oxid aus der Gruppe der Alkali- und Erdalkalimetalle als Absorbermaterial. Besonders bevorzugt ist Kalziumoxid (CaO) als Absorbermaterial. Neben seiner Eigenschaft als Wasser bindendes Reagens bietet CaO den zusätzlichen Vorteil, dass Säurebildner, wie z.B. Chlorionen oder organische Säuren, die von Produkten abgespalten werden, als Gase oder als durch Reaktion mit Wasser gebildet Säure mit dem CaO zum Salz reagieren und somit gebunden werden. Zudem hat sich gezeigt, dass CaO auch Sauerstoff zu absorbieren vermag, also die Eigenschaften eines Oxygen Scavangers aufweist.

Der bevorzugte Gehalt des Polyolefins der Innenschicht beträgt 0,5 bis 50 Gew.-% CaO, insbesondere 10 bis 30 Gew.-% CaO.

Als Absorbermaterial kommen aber auch andere Feuchte absorbierende Materialien in Betracht, wie z.B. Silikate, Zeolithe, superabsorbierende Polymere, Polyelektrolyte, physikalisch absorbierende Salze wie z.B. LiCl, MgSO4, u.a. sowie Feststoffe, wie z.B. Kohlenstoffmodifikationen. Bevorzugt sind Kristallwasser aufnehmende Salze wie MgSO4 und Silikagele; diese weisen die am besten geeignete Absorptionsisotherme auf.

Das Polyolefin der Innenschicht besteht bevorzugt aus einem Polyethylen hoher Dichte (HDPE) und/oder einem linearen Polyethylen niedriger Dichte (LLDPE) und /oder einem Polyethylen niedriger Dichte (LDPE) und/oder aus Polypropylen (PP). Es können auch Bestandteile säuremodifizierter Polyolefine, wie lonomere, z.B. Surlyn^{®}, Ethylen/Acrylsäure Copolymer (EAA) oder mit Maleisäureanhydrid gepfropftes Polypropylen (PP-MSA) enthalten sein. Diese säuremodifizierten Polyolefine wirken als Haftvermittler, so dass in gewissen Fällen auf einen separaten Primer verzichtet werden kann.

Die siegelfähige Innenschicht umfasst ein Siegelmedium in der Form eines Lackes, insbesondere eines Heisssiegellackes, einer Folie oder einer siegelfähigen Beschichtung und dient zur Siegelung der Deckfolie gegen die Innenseite des Blisterbodenteils, wobei die Siegelung eine Festversiegelung oder eine Siegelung mit geringerer Haftkraft zur Bildung einer peelbaren Öffnung sein kann.

Das Polyolefin der Innenschicht kann aus einer einzigen Schicht oder aus mehreren Schichten bestehen.

Besonders bevorzugt ist ein Laminat, bei dem das Polyolefin der Innenschicht aus wenigstens zwei Schichten besteht, wobei die äusserste, von der Aluminiumfolie am weitesten entfernte Schicht im Wesentlichen kein Absorbermaterial enthält. Mit dieser Massnahme wird eine glatte Oberfläche erzeugt, so dass der Reibungskoeffizient des erfindungsgemässen Laminates dem herkömmlicher Laminate entspricht. Durch das Fehlen der Zusatzstoffe wie CaO in der äussersten Schicht ergibt sich im Vergleich zu herkömmlichen Laminaten bei der Verarbeitung auch keine Abrasion an Formstempeln oder anderen Maschinenkomponenten.

Da Absorptionsmittel wie CaO mit der Feuchte basisch reagieren, verhindert die zusatzstofffreie äusserste Schicht auch, dass eine Änderung des pH-Werts das Füllgut negativ in der Stabilität beeinflussen kann.

Besonders bevorzugt ist ein Laminat, bei dem das Polyolefin der Innenschicht eine Coextrusionsschicht aus wenigstens zwei Schichten ist, wobei die äusserste, von der Aluminiumfolie am weitesten entfernte Schicht im Wesentlichen kein Absorbermaterial enthält.

Die Sperrschicht im Laminat ist vorzugsweise eine Aluminiumfolie, die auf der dem Polyolefin zugewandten Seite bevorzugt mit einem Haftvermittler, insbesondere mit einem wasser- oder lösemittelbasierten Primer, oder mit einem polymeren Haftvermittler beschichtet sein kann.

Bevorzugt enthält die innerste, der Sperrschicht am nächsten liegende Schicht im Wesentlichen kein Absorbermaterial. Damit können die Partikel des Absorbermaterials beim unter Druck ausgeführten Kaltformschritt beim Umformen des Bodenlaminates zum Blister nicht in die als Sperrschicht verwendete Aluminiumfolie eindrücken. Die Partikel können mit dieser Massnahme keine potentiellen Schwachstellen in der Aluminiumfolie erzeugen und damit auch die porenfreie Verformbarkeit nicht reduzieren.

Die Aussenschicht ist bevorzugt ein mit der Aluminiumfolie über eine Klebstoffschicht verbundener Kunststofffilm aus orientiertem Polyamid (oPA).

Zur Herstellung einer Blisterpackung zur Verpackung von gegen Feuchte empfindlichen Produkten wird aus dem Laminat mit dem erfindungsgemäss konditionierten Absorbermaterial zunächst durch Kaltverformung ein Blisterbodenteil gefertigt. Nach dem Befüllen des Blisterbodenteils wird anschliessend eine Deckfolie, die eine Sperrschicht als Barriere gegen Wasserdampf und Gase umfasst, gegen die Innenschicht des Laminates auf das Blisterbodenteil gesiegelt.

Die erfindungsgemässe Blisterpackung wird bevorzugt verwendet zum Verpacken von pharmazeutischen Produkten wie feuchteempfindlichen Tabletten und Pulvern.

Weitere Vorteile, Merkmale und Einzelheiten der Erfindung ergeben sich aus der nachfolgenden Beschreibung bevorzugter Ausführungsbeispiele, sowie anhand der Zeichnung; diese zeigt schematisch in
- Fig. 1: eine Anordnung zur Durchführung der erfindungsgemässen Verfahrens;
- Fig. 2: den Aufbau eines zur Durchführung des erfindungsgemässen Verfahrens geeigneten Laminates.

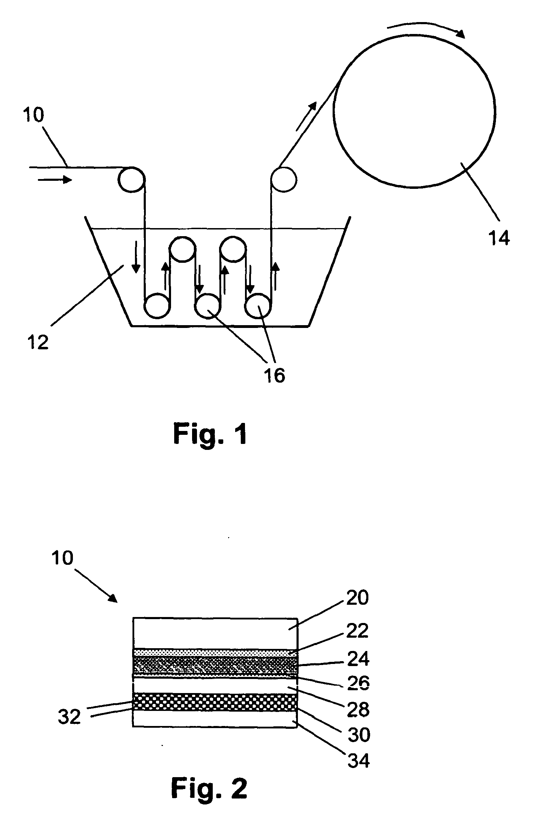

Ein kontinuierlich hergestelltes, kaltverformbares Laminat 10 für die Herstellung von Blisterbodenteilen für Blisterpackungen zur Verpackung von feuchteempfindlichen Produkten wird gemäss Fig. 1 während der Herstellung kontinuierlich durch ein Wasserbad 12 geleitet und nach dem Austritt aus dem Wasserbad kontinuierlich zu einer Rolle 14 gewickelt. Im Wasserbad wird das Laminat über Umlenkrollen 16 mehrfach umgelenkt. Über die Anzahl Umlenkrollen 16 kann die gewünschte Verweilzeit des Laminates 10 im Wasserbad 12 eingestellt werden.

Ein Laminat 10 weist gemäss Fig. 2 beispielhaft den folgenden Schichtaufbau auf:
- 20: Film aus orientiertem Polyamid (oPA), 25 µm
- 22: Klebstoffschicht
- 24: Aluminiumfolie, 45 µm
- 26: Haftvermittler (EAA),
- 28: erste Schicht aus Polyethylen hoher Dichte (HDPE), 7µm
- 30: zweite Schicht aus Polyethylen (PE), 45µm, mit
- 32: 30% CaO-Partikeln als Absorber von Feuchte, Sauerstoff und Säure

- 34: dritte Schicht aus Polyethylen hoher Dichte (HDPE), 7µm

Der oPA-Film 20 bildet die spätere Aussenseite eines aus dem Laminat 10 hergestellten Blisters, die PE-Schichten (28, 30, 34) bilden als Siegelschicht die Innenseite.

## Patentansprüche

1. Verfahren zum Einstellen des Feuchtegrades eines Feuchte absorbierenden Absorbermaterials (32) In einem in Form eines Bandes vorliegenden Laminat (10) zur Herstellung von Blisterbodentellen für Blisterpackungen zur Verpackung von gegen Feuchte empfindlichen Produkten, welches Laminat (10) eine Sperrschicht (24) als Barriere gegen Wasserdampf und Gase, eine auf einer ersten Seite der Sperrschicht angeordnete Aussenschicht (20) aus Polyamid, ein auf der zweiten Seite der Sperrschicht (24) angeordnetes, Feuchte absorbierendes Absorbermaterial (32) und eine auf der zweiten Seite der Sperrschicht (24) angeordnete, das Absorbermaterial (32) abdeckende slegelfähige Innenschicht (28, 30, 34) aus einem Polyolefln aufweist,
**dadurch gekennzeichnet, dass**
das Laminat (10) zur Aufnahme von Wasser in die Aussenschicht (20) aus Polyamid durch ein Wasserbad (12) geführt oder mit Wasser berieselt oder bedampft und nachfolgend zur Lagerung aufgerollt wird, wobei das von der Aussenschicht (20) aus Polyamid aufgenommene Wasser im aufgerollten Laminat (10) durch Permeation über die innenschicht (34) aus Polyolefin an das Absorbermaterial (32) abgegeben wird.

2. Verfahren nach Anspruch 1, **dadurch gekennzeichnet, dass** das Laminat (10) während seiner Herstellung kontinuierlich durch ein Wasserbad (12) geleitet und nachfolgend aufgerollt wird.

3. Verfahren nach Anspruch 2, **dadurch gekennzeichnet, dass** die von der Aussenschicht (20) aus Polyamid aufzunehmende Wassermenge durch die Verweilzelt des Laminates (10) im Wasserbad (12) gesteuert wird.

4. Verfahren nach Anspruch 3, **dadurch gekennzeichnet, dass** die Verweilzeit des Laminates (10) im Wasserbad (12) bei gleich bleibender Produktionsgeschwindigkeit durch Verlängern oder Verkürzen der Eintauchlänge verlängert bzw. verkürzt wird.

5. Verfahren nach Anspruch 3 oder 4, **dadurch gekennzeichnet, dass** das Laminat (10) im Wasserbad (12) über Umlenkrollen (16) geführt und die Verwellzeit des Laminates (10) im Wasserbad (12) durch Änderung der Anzahl Umlenkrollen (16) eingestellt wird.

## Claims

1. Method for setting the moisture level of a moisture-absorbing absorber material (32) in a laminate (10) in the form of a band for manufacturing blister base parts for plaster packs for packaging moisture-sensitive products, said laminate (10) comprising a barrier layer (24) as a barrier against water vapour and gases, a polyamide outer layer (20) arranged on a first side of the barrier layer, a moisture-absorbing absorber material (32), arranged on the second side of the barrier layer (24), and a polyolefin sealable inner layer (28, 30, 34) arranged on the second side of the barrier layer (24) and covering the absorber material (32), **characterised in that**, so as to absorb water in the polyamide outer layer (20), the laminate (10) is passed through a water bath (12) or wetted or vaporised with water and subsequently rolled up for storage, the water absorbed by the polyamide outer layer (20) being released into the absorber material (32) in the rolled-up laminate (10) by permeation via the polyolefin inner layer (34).

2. Method according to claim 1, **characterised in that** the laminate (10) is passed through a water bath (12) continuously during the manufacture thereof, and subsequently rolled up.

3. Method according to claim 2, **characterised in that** the amount of water to be absorbed by the polyamide outer layer (20) is controlled by way of the retention time of the laminate (10) in the water bath (12).

4. Method according to claim 3, **characterised in that** the retention time of the laminate (10) in the water bath (12) is made longer or shorter at a constant production rate by increasing or decreasing the immersion time.

5. Method according to either claim 3 or claim 4, **characterised in that** the laminate (10) is passed over return rollers (16) in the water bath (12), and the retention time of the laminate (10) in the water bath (12) is set by changing the number of return rollers (16).

## Revendications

1. Procédé pour l'ajustement du degré d'humidité d'un matériau absorbant l'humidité (32) dans un stratifié (10) présent dans la forme d'une bande destiné à la préparation de parties de fond pelliculées pour des emballages pelliculés destinés à l'emballage de produits sensibles à l'humidité, lequel stratifié (10) présente une couche barrière (24) comme barrière à la vapeur d'eau et aux gaz, une couche externe (20) de polyamide, disposée sur un premier côté de la couche barrière un matériau absorbant l'humidité (32) disposé sur le second côté de la couche barrière (24) et une couche interne (28, 30, 34) d'une polyoléfine scellable recouvrant le matériau absorbant (32), disposée sur le second côté de la couche barrière (24), **caractérisé en ce que**
le stratifié (10) destiné à prélever l'eau dans la couche externe (20) de polyamide est introduit dans un bain d'eau (12) ou est arrosé ou est vaporisé avec de l'eau et est ensuite enroulé pour un stockage, l'eau prélevée par la couche externe (20) de polyamide étant libérée dans le stratifié enroulé (10) par perméation à travers la couche interne (34) constituée de polyoléfine au matériau absorbant (32).

2. Procédé selon la revendication 1, **caractérisé en ce que** le stratifié (10) est introduit pendant sa préparation en continu à travers un bain d'eau (12) et est ensuite enroulé.

3. Procédé selon la revendication 2, **caractérisé en ce que** la quantité d'eau prélevée par la couche externe (20) constituée de polyamide est réglée par l'intermédiaire du temps de séjour du stratifié (10) dans le bain d'eau (12).

4. Procédé selon la revendication 3, **caractérisé en ce que** le temps de séjour du stratifié (10) dans le bain d'eau (12) est, pour une vitesse de production restant constante, allongé ou diminué par allongement ou diminution de la durée d'immersion.

5. Procédé selon la revendication 3 ou 4, **caractérisé en ce que** le stratifié (10) est introduit dans le bain d'eau (12) par l'intermédiaire de poulies de guidage (16) et le temps de séjour du stratifié (10) dans le bain
d'eau (12) est ajusté par modification du nombre de poulies de guidage (16).
